# EUROPEAN PATENT SPECIFICATION

(11) **EP 2 101 266 B1**
(45) Date of publication and mention of the grant of the patent: **15.06.2011**
(21) Application number: 08253960.2
(22) Date of filing: 10.12.2008
(51) Int. Cl.: G06F 11/20

(54) **Remote copy system and method having copy path check unit**
Fernkopiersystem und Verfahren mit Kopierpfadüberprüfungsmittel
Système et méthode de copie à distance avec unité de vérification du chemin de copie

(30) Priority: 10.03.2008 JP 2008059776
(43) Date of publication of application: 16.09.2009
(73) Proprietor: Hitachi Ltd., Chiyoda-ku Tokyo (JP)
(72) Inventor: Uratani, Ikuo, Tokyo 100-8220 (JP); Urabe, Kiichiro, Tokyo 100-8220 (JP)
(74) Representative: Moore, Graeme Patrick

(56) References cited:
- EP-A- 1 770 498
- US-A1- 2006 224 845
- US-A1- 2007 220 322
- US-B1- 6 643 667

## Description

This application relates to and claims priority from Japanese Patent Application No. JP2008-059776, filed on March 10, 2008.

The present invention relates to a remote copy system in which data consistency is required and a check method, and is particularly suited for use in a technique for copying common data plural times.

EP1770498 discloses an invention which transfers replication logical volumes between and among storage control units in a storage system comprising a plurality of storage control units. To transfer replication logical volumes from a storage control unit (20A) to a storage control unit (20B), a virtualization device (52) sets a path to the storage control unit (20B). The storage control unit (20B) then prepares a differential bitmap in order to receive access requests. When the preparation is completed, the virtualization device (52) makes access requests to the storage control unit (20B). The storage control unit (20B) then hands over the access requests to the storage control unit (20A). Subsequently, the storage control unit (20A) performs a process so that the access requests are reflected in a disk device (24) and performs an emergency destage of storing data in a cache memory into the disk device (24). When the emergency destage ends, the storage control unit (20B) connects to an external storage control unit (70) and hands over access requests to the external storage control unit (70).

Recently, a remote copy, in which a storage apparatus is located in a position remote from a certain storage apparatus and a copy for data stored in the certain storage apparatus is stored in the remotely-located storage apparatus, has been known.

In the storage apparatuses used in the remote copy system, a logical volume (hereinafter referred to as a volume) is formed in a storage area provided by a hard disk. Data from a host computer (a host system) is stored in this volume. With a volume in the certain storage apparatus serving as a copy-source volume, copy data is stored in a copy-destination volume in the remotely-installed storage apparatus.

Reference 1 (JP2007-220112 A), corresponding to Document US 2007/220312, discloses a technique capable of checking the copy-destination volume that has been set as a paired volume for the copy-source volume, in which data has been lost due to a failure or the like in a certain storage apparatus, and switching to the copy-destination volume to have it serve as the copy-source volume.

In the remote system, the storage apparatuses include a command device for processing a control command from the host computer. The command device is a dedicated volume or software used by the storage apparatus to exchange control commands with the host computer. When the host computer writes data (a control command) in the command device provided in the storage apparatus, the storage apparatus processes the control command stored in the command device.

Reference 2 (JP2007-140601 A), corresponding to document EP-A-1 785 833, discloses a technique using this command device. In the technique in reference 2, a host computer connected to a first storage apparatus can issue a control command to be processed to a second storage apparatus that is connected to the first storage apparatus without the need for providing a host computer connecting to the second storage apparatus.

In recent remote copy systems, copy from the copy-source volume to the copy-destination volume is performed more than once, like in the technique disclosed in reference 1. In many of the recent remote copy systems, common data is copied plural times from the copy-source volume to the copy-destination volume and from the copy-destination volume to a subsequent copy-destination volume.

However, in such cases, the remote copy system has to stop data handling in the copy-source volume, perform data copy between the copy-destination volume and the subsequent copy-destination volume, stop copy between the copy-destination volume and the subsequent copy-destination volume and temporarily interrupt the communication between the volumes (hereinafter referred to as "partition", and this causes a problem - an administrator, having commanded the copying, has to check with each of the storage apparatuses if the data in each pair of data volumes between which data copy has been performed plural times is consistent, and manually check the path for data copy.

It light of the above circumstances, it is an aim of this invention to provide a remote copy system and a check method capable of reducing the manual work of checking the operation of a storage apparatus performed by an administrator, and of managing continuous data copy.

In order to try to achieve this aim, provided according to a preferred aspect of this invention is a remote copy system that includes at least: a host system; a first storage apparatus connected to the host system so as to enable communication therebetween; and a second storage apparatus connected to the first storage apparatus so as to enable communication therebetween, in which the first storage apparatus and second storage apparatus each include: a logical device in which a control command from the host system is written; one or more logical volumes that are provided by storage areas in plural hard disks and store data; and pair information regarding pairs formed from the plural logical volumes, and characterized in that the remote system further includes a check unit that checks based on the pair information, when the control command from the host system is written in each logical device, a copy path from a logical volume designated as a start point by the host system to a final logical volume in which data same as that in the start point logical volume is stored.

Accordingly, the administrator will not need to manually check the copy path any longer. Also, the remote copy system can integrally check the copy path.

Provided according to another preferred aspect of this invention is a check method for a remote copy system that includes at least: a host system; a first storage apparatus connected to the host system so as to enable communication therebetween; and a second storage apparatus connected to the first storage apparatus so as to enable communication therebetween, the method comprising the steps of: the first storage apparatus and second storage apparatus having a control command from the host system written in a logical device, storing data in one or more logical volumes provided by storage areas in plural hard disks, and managing pair information regarding pairs formed from the plural logical volumes; and characterized in that the remote system comprises a check step of checking, when the control command from the host system is written in each logical device, a copy path from a logical volume designated as a start point by the host system to a final logical volume in which data same as that in the start point logical volume is stored, based on the pair information.

Accordingly, the administrator will not need to manually check the copy path any longer. Also, the remote copy system can integrally check the copy path.

This invention aims to reduce the manual work of checking the operation of the storage apparatuses performed by the administrator and enables the remote copy system to integrally manage continuous data copy.

### Brief Description of the Drawings

Fig. 1 is a block diagram showing the configuration of a remote copy system according to a first embodiment.

Fig. 2 is a block diagram showing the configuration of a storage apparatus according to the above first embodiment.

Fig. 3 is a table showing a command device table according to the above first embodiment.

Fig. 4 is a table showing a copy path table according to the above first embodiment.

Fig. 5 is a table showing a volume table according to the above first embodiment.

Fig. 6 is a table showing a copy pair table according to the above first embodiment.

Fig. 7 is a flowchart for check processing according to the above first embodiment.

Fig. 8 is an example of a screen in the check processing according to the above first embodiment.

Fig. 9 is an example of a screen in the check processing according to the above first embodiment.

Fig. 10 is an example of a screen in the check processing according to the above first embodiment.

Fig. 11 is a flowchart for check execution processing according to the above first embodiment.

Fig. 12 is a diagram explaining how a control command is processed in the storage apparatus according to the above first embodiment.

Fig. 13 is a diagram explaining how the control command is processed in the storage apparatus according to the above first embodiment.

Fig. 14 is a diagram explaining a modification in the above first embodiment.

Fig. 15 is a flowchart showing check recovery execution processing according to the above first embodiment.

Fig. 16 is a flowchart showing the check recovery execution processing according to the above first embodiment.

Fig. 17 is an example of a screen in the check recovery execution processing according to the above first embodiment.

Fig. 18 is a block diagram showing the configuration of a remote copy system according to a second embodiment.

Fig. 19 is a block diagram showing the content of a shared memory according to the above second embodiment.

Fig. 20 is a flowchart for check processing according to the above second embodiment.

Fig. 21 is a flowchart for check recovery execution processing according to the above second embodiment.

Fig. 22 is a flowchart for the check recovery execution processing according to the above second embodiment.

Fig. 23 is a diagram explaining access between agents according to the above second embodiment.

Fig. 24 is a diagram explaining access between the agents according to the above second embodiment..

Embodiments of this invention will be described with reference to the attached drawings.

### (1) First embodiment

### (1-1) System configuration

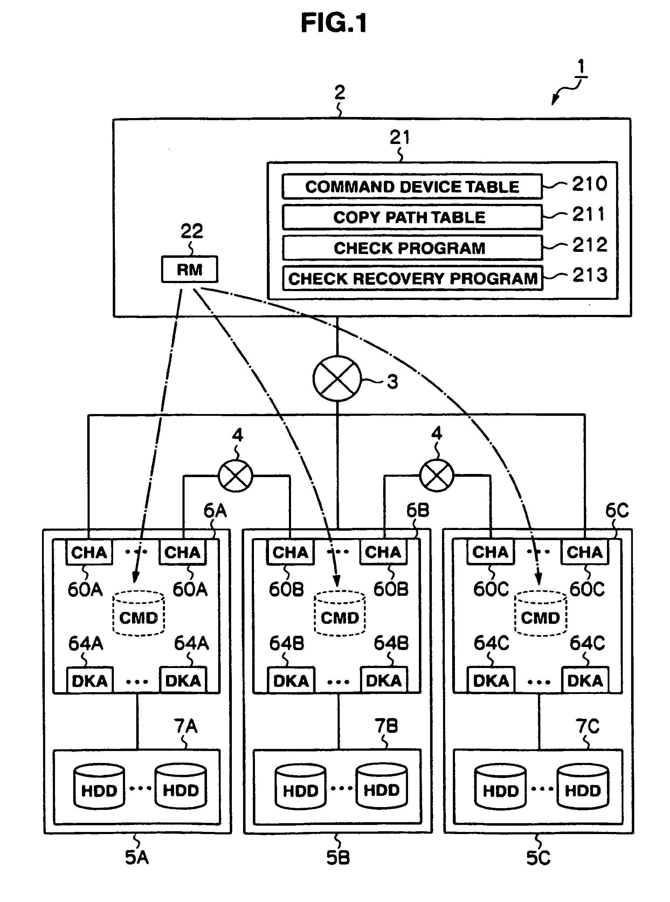

Fig. 1 is a block diagram relating to the configuration of a remote copy system 1 according to a first embodiment of this invention.

In the remote copy system 1, a host computer 2 is connected via a network 3 to each of a first storage apparatus 5A installed in a first site, a second storage apparatus 5B installed in a second site and a third storage apparatus 5C installed in the third site. The first storage apparatus 5A and the second storage apparatus 5B are connected to each other via a copy network 4 and the second storage apparatus 5B and the third storage apparatus are connected to each other via the copy network 4.

The second site is located in a short or medium distance from the first site and the third site is located in a long distance from the first site. In the below description, the symbols A, B and C will be omitted except when there is the need to distinguish one storage apparatus 5 from the others.

The host computer 2 is a host system including information processing resources such as a CPU (not shown) and a memory 21, and the host computer 2 may be a personal computer, work station, main frame, etc. The host computer 2 also includes: information input devices (not shown) such as a keyboard, switch, pointing device or microphone; and information output devices (not shown) such as a monitor display or speaker. The host computer 2 has installed software referred to as a RAID manager 22 (shown as "RM" in the drawings).

The RAID manager 22 is an agent for commanding the storage apparatuses 5 to execute controls such as commanding copy, handling pair relationships and retrieving the status of a volume Vol.

The memory 21 in the host computer 2 stores a command device table 210, a copy path table 211, a check program 212 and a check recovery program 213. Each of the above tables will be described later.

The check program 212 is a program for checking a copy path via which common data is stored plural times, and it is executed by the RAID manager 22.

The check recovery program 213 is a program for checking a copy path via which common data is stored plural of times, recovering, if the copy path is disconnected at a zone between certain volumes, the copy path, and copying the common data. The check recovery program 213 is executed by the RAID manager 22.

The network 3 and the copy network 4 are each configured by, for example, a SAN (Storage Area Network), a LAN (Local Area Network), and the Internet, a public line or a private line. In this embodiment, the SAN is used as the network 3 and the copy network 4, and the host computer 2 and each storage apparatus 5 communicate with each other based on a fibre channel protocol.

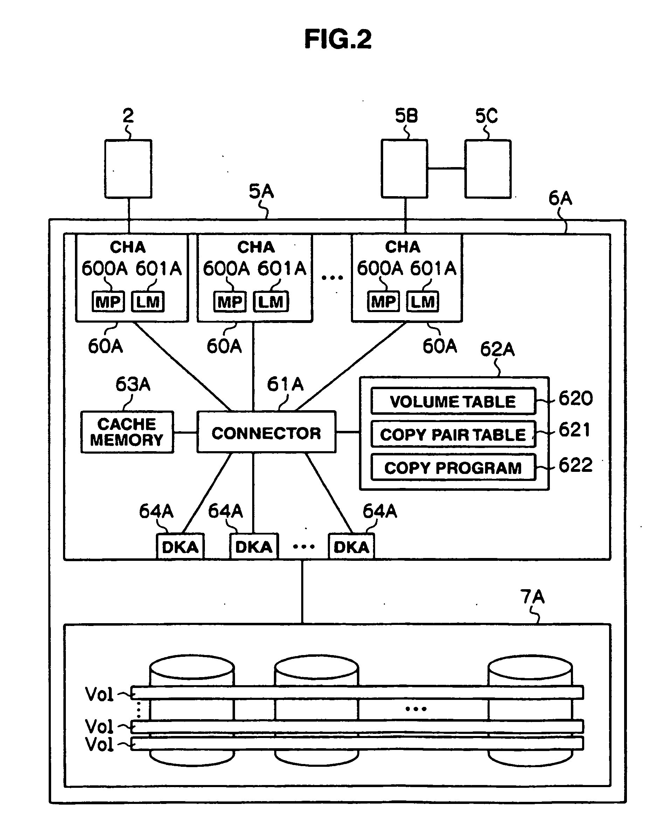

The configuration of the storage apparatuses 5 will be described with reference to Figs.1 and 2. The storage apparatus 5 includes a disk 7 configured from plural hard disks HDD and a controller 6 that manages the plural hard disks by a RAID (Redundant Array of Independent/lnexpensive Disks) method.

The hard disks are each configured by an expensive disk such as SCSI (Small Computer System Interface) or an inexpensive disk such as SATA (Serial AT Attachment) or an optical disc. Volumes Vol are formed in storage areas provided by the hard disks.

The controller 6 includes plural channel adapters 60, a connector 61, a shared memory 62, a cache memory 63 and plural disk adapters 64.

Each channel adapter 60 is configured as a microcomputer system having a microprocessor 600, a memory 601 and a communication interface, and includes a port (not shown) for connecting itself to the network 3. Each channel adapter 60 interprets various commands transmitted from the host computer 2 and performs required processing. The port in each channel adapter 60 is assigned a network address (e.g., an IP address and WWN) for identifying the relevant channel adapter 60 and this enables each channel adapter 6 to serve as an individual NAS (Network Attached Storage.) In this embodiment, an SCSI communication interface is used for communication with the raid manager 22.

The memory 601 in each channel adapter 60 also includes a command device CMD. When a control command from the host computer 2 is written in the command device, the microprocessor 600 in the channel adapter 60 processes the control command stored in the command device.

The connector 61 is also connected to the shared memory 62, the cache memory 63 and the disk adapter 64, in addition to the channel adapter 60 described above. Data or commands are exchanged between the channel adapter, the shared memory 62, the cache memory 63 and the disk adapter 64 via the connector. The connector may be configured by a switch or a bus - for example, an ultra-high-speed cross bus switch for performing data transmission by high-speed witching.

The shared memory 62 is a storage memory shared by the channel adapters 60 and the disk adapters 64. The shared memory 62 is mainly used for storing system configuration information and various control programs read from the volumes Vol when the storage apparatus 5 is turned on and for storing commands from the host computer 2. The shared memory 62 stores a volume table 620, a copy pair table 621 and a copy program 622 for performing data copy. The volume table 620 and the copy pair table 621 stored in the shared memory 62 will be described later.

The cache memory 63 is also shared by the channel adapters 60 and the disk adapters 64. The cache memory 63 is used mainly for temporarily storing user data input to or output from the storage apparatus 5.

Each disk adapter 64 is configured as a microcomputer system having a microprocessor (not shown) and memory (not shown), and serves as an interface for providing protocol control when communicating with the disk 7.

### (1-2) Configuration of tables

Next, the tables 210 and 211 held in the host computer 2 and the tables 620 and 621 held in each storage apparatus 5 will be described below.

### (1-2-1) Command device table

The command device table 210 is a table held in the memory 21 in the host computer 2 and manages an order for issuing check commands to the plural command devices to check a copy path for common data.

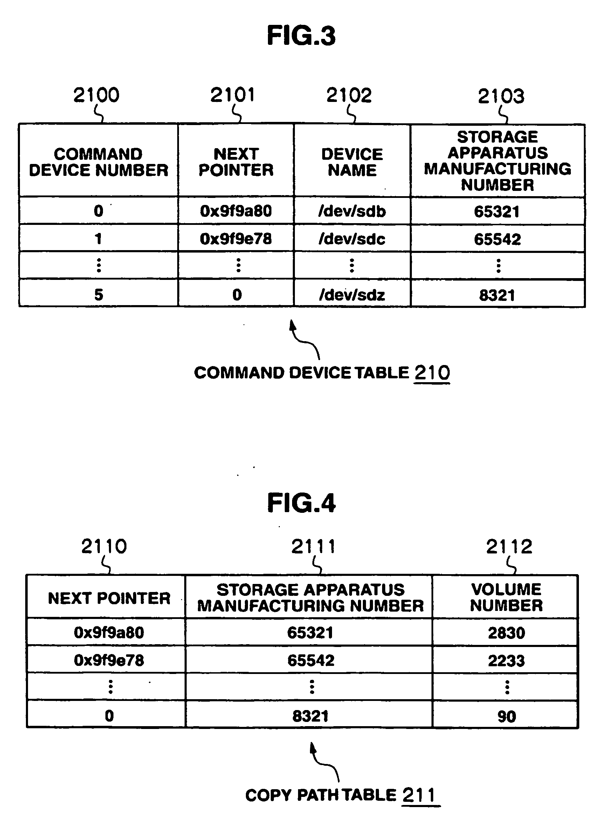

As shown in Fig. 3, the command device table 210 includes a "command device number" field 2100, a "next pointer" field 2101, a "device name" field 2102 and a "storage apparatus manufacturing number" field 2103.

The "command device number" field 2100 shows an identifier assigned in the host computer 2 so that the host computer 2 can identify each command device in each storage apparatus 5.

The "next pointer" field 2101 shows a pointer value that indicates the next table address used for checking the copy path. For example, as shown in Fig. 3, the pointer "0x9f9a80" shows command device information in a second row as the next table address. Likewise, the pointer"0x9f9e78" shows command device information as the next table address. The pointer "0" indicates there is no next table address.

The "device name" field 2102 shows a file name for the command device corresponding to the command device number. In other words, the RAID manager 22 in the host computer 2 writes a control command in the specified file.

The "storage apparatus manufacturing number" field 2103 shows the manufacturing number of the storage apparatus 5 having the relevant command device.

### (1-2-2) Copy path table.

The copy path table 211 is held in the memory in the host computer 2 and manages check results of the copy path check for the common data. The copy path table 211 is created every time the copy path is checked.

As shown in Fig. 4, the copy path table 211 includes a "next pointer" field 2110, a "storage apparatus manufacturing number" field 2111 and a "volume number" field 2112.

The "next pointer" field 2110 shows a pointer value indicating the next table address showing the copy path. For example, as shown in Fig. 4, the pointer "0x8f9a80" indicates the copy path information in the second row as the next table address. The pointer "0" indicates that there is no table address.

The "storage apparatus manufacturing number" field 2111 shows the manufacturing number of the storage apparatus 5 providing a volume Vol in which the common data is stored.

The "volume number" field 2112 shows the volume number of the volume in which the common data is stored.

The example of the table 211 in Fig. 4 shows that the volume with the number "2830" assigned, the volume with the number "2233" assigned and the volume with the number "90" assigned constitute a volume group in which common data is stored as a result of data copy performed plural times. Accordingly, this example shows that the volume from which the copy is started is the volume having the number "2830" and the volume at which the copy is terminated is the volume having the number "90."

### (1-2-3) Volume table

The volume table 620 is a table held in the shared memory 62 in each storage apparatus 5 and manages volumes provided by each storage apparatus 5.

The volume table 620 includes a "volume number" field 6200 showing an identification number assigned to each volume provided by the storage apparatus 5 and a "status" field 6201 showing the status of the relevant volume Vol.

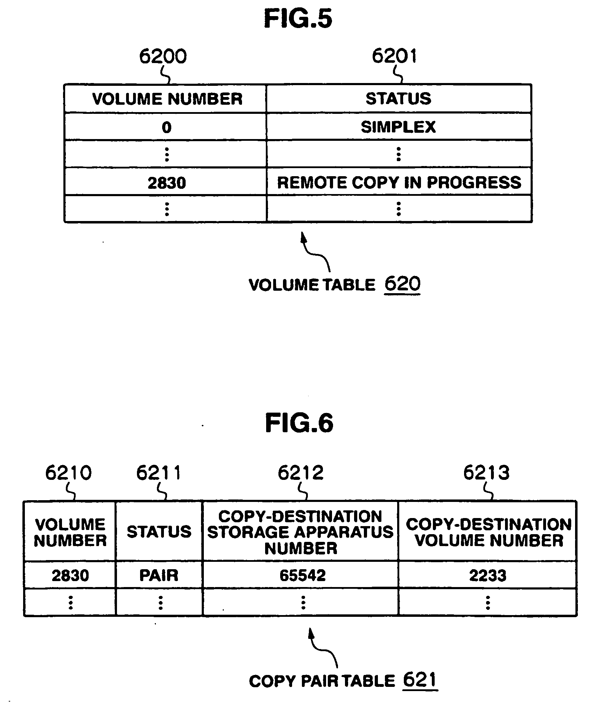

In the example shown in the table 620 in Fig. 5, the volume "0" stores information "SIMPLEX" indicating that this volume is not a target for a copy pair, and the volume "2830" stores information "REMOTE COPY IN PROGRESS" indicating that a remote copy is now in progress.

### (1-2-4) Copy pair table

The copy pair table 621 is a table held in the shared memory 62 in each storage apparatus 5 and manages paired volumes.

The copy pair table 621 includes a "volume number" field 6210 showing a copy-source volume Vol, a "status" field 6211, a "copy-destination storage apparatus manufacturing number" field 6212 showing a copy-destination storage apparatus and the "copy-destination volume number" field 6213 showing a copy-destination volume.

In the example of the table 621 shown in Fig. 6, the "status" field 6211 stores pair-setting information for the copy-source volume and the copy-destination volume Vol. Once the copy-destination volume is determined and the pair is set between the copy-source volume and this copy-destination volume, the information "PAIR" is stored.

### (1-3) Check processing

Next, processing in which the host computer 2 checks a copy path using the above tables will be described. The check processing is executed by the RAID manager 22 in the host computer 2 in accordance with the check program 212.

For convenience of explanation, the below description will be provided on the premise that a storage apparatus as a check target is that the first storage apparatus 5A, a check target volume is a copy-source volume included in the first storage apparatus 5A, a copy-destination volume is included in the second storage apparatus 5B and a subsequent copy-destination volume is included in the third storage apparatus 5C.

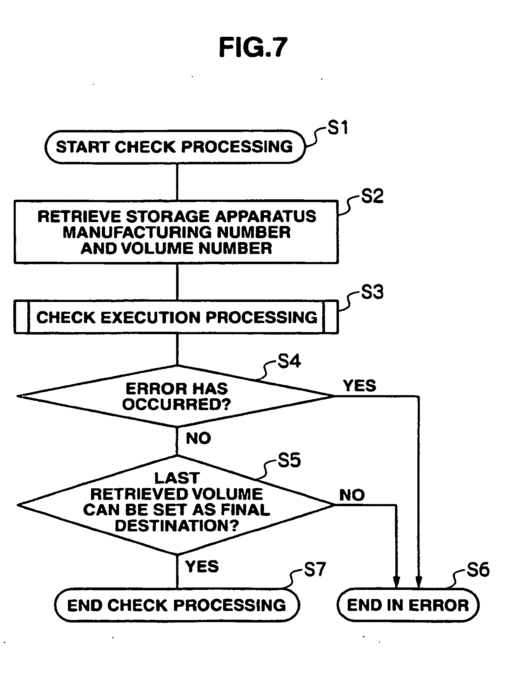

Fig. 7 is a flowchart showing the check processing. First the RAID manager 22 refers to the command device table 210 and issues to the check target storage apparatus 5A a retrieval command for retrieving the manufacturing number of that storage apparatus and the number of the copy-source, and starts the check processing (S1).

Next, the RAID manager 22 retrieves information about the check target storage apparatus 5A manufacturing number and the copy-source volume number from this storage apparatus 5A (S2)

The RAID manager 22 then performs check execution processing for checking a copy path from the copy-source volume as a start point to the copy-destination volume in which copied data is finally stored (S3). This check execution processing will be described later in detail.

If the result of the check processing is not an error and the RAID manager 22 can retrieve information about the copy-destination volume as a final destination (S4: No), the RAID manager 22 judges whether or not the retrieved last volume can be set as the final destination (55).

If the retrieved last volume can be set as the final destination (S5: Yes), the RAID manager 22 Vol terminates the check processing normally (S7). When the check processing is terminated normally, the RAID manager 22 registers the check result in the copy path table 211.

On the other hand, if the RAID manager 22 determines that the retrieved last volume cannot be set as the final destination (S5: No), the check processing ends with an error (S6).

In step S4, if an error result is obtained as the execution result of the check processing (S4: Yes), the RAID manager 22 terminates the check processing as an error (S6).

Here, the administrator can check the execution result of the check processing on a screen of the host computer 2.

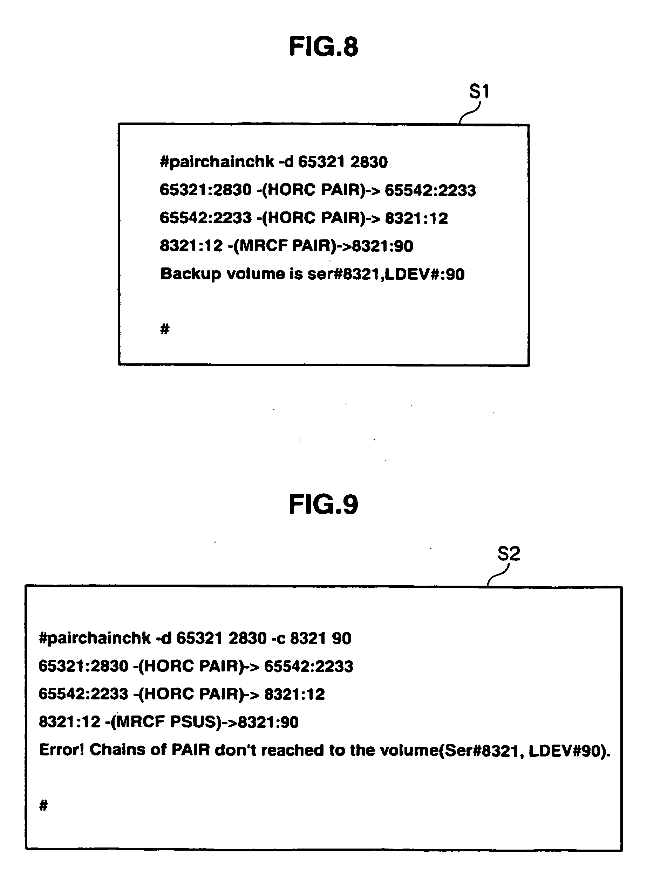

Fig. 8 shows a screen S1 displayed when the information regarding the final copy-destination volume can be retrieved in step S4. The screen S1 shows, as a result of the check of the copy path for the volume number "2830" in the storage apparatus manufacturing number "65321", that the first copy destination is the volume with the volume number "2233" in the storage apparatus with the manufacturing number "65542," the subsequent copy-destination is the volume with the volume number "12" in the storage apparatus with the manufacturing number "8321" and the final copy-destination is the volume with the volume number "90" in the storage apparatus with the manufacturing number "8321."

Fig. 9 shows a screen S2 displayed when the information regarding the final copy-destination volume cannot be retrieved in step S4. This screen S2 shows that, as a result of the copy path check for the volume number "2830" in the storage apparatus manufacturing number "65321," the copied data is not stored in the final copy destination - the volume with the volume number "90" in the storage apparatus with the manufacturing number "8321" - and that an error has occurred.

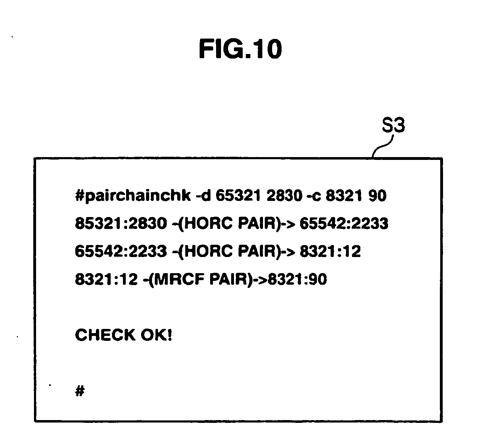

Fig. 10 shows a screen S3 displayed when the RAID manager 22 checks that the last retrieved volume Vol is set as the final destination in step S5. The screen S3 shows that the start point copy source is the volume with the volume number "2830" in the storage apparatus with the manufacturing number "65321" and when the volume with the volume number "90" in the storage apparatus with the manufacturing number "8321" is set as the final copy destination, the copy path is formed properly. Since the content of this copy path is the same as that of the copy path described with reference to the screen in Fig. 8, its description will be omitted.

### (1-4) Check execution processing

Next, the check execution processing in step S3 will be described. This check execution processing is also performed by the RAID manager 22 in the host computer 2 in accordance with the check program 212. Copy between volumes is performed in accordance with the copy program 622 in the channel adapter 60 when a control command containing a copy command is written in the command device.

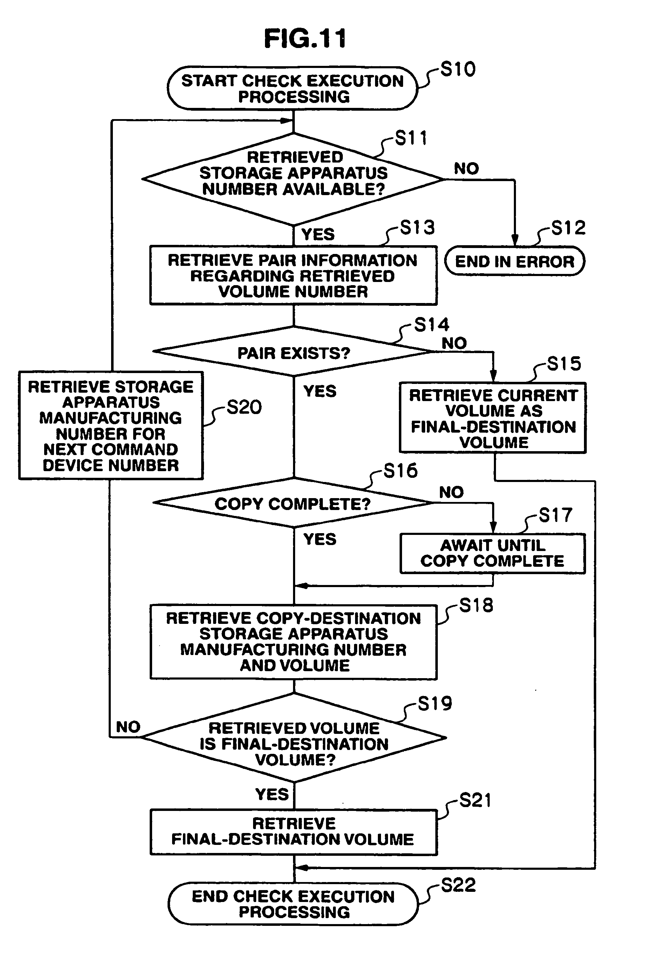

As shown in Fig. 11, first, when retrieving the information about the storage apparatus 5A manufacturing number and the copy-source volume number from the check target storage apparatus 5A, the RAID manager 22 starts the check execution processing (S10).

Next, if the retrieved storage apparatus 5A is connected to the host computer 2 and is available (S11: YES), the RAID manager 22 issues a retrieval command for pair information regarding the retrieved volume number. Then the check-target storage apparatus 5A refers to the copy pair table 621 and transmits the pair information regarding the retrieved volume number to the host computer 2.

When receiving the pair information from the check target storage apparatus 5A (S13), the RAID manager 22 judges if there is a volume having been set as a pair partner for the retrieved volume number (S14).

If it is determined that there is no set paired volume for the retrieved volume number based on the pair information (S14: No), the RAID manager 22 retrieves the retrieved current volume as the final destination (S15) and terminates the check execution processing (S22).

On the other hand, if it is determined, based on the pair information, that there is a volume set as a paired volume for the retrieved volume number (S14: Yes), the RAID manager 22 checks if the copy has been completed (S16). Specifically, the RAID manager 22 issues a retrieval request for copy information to the check target storage apparatus 5A. The check target storage apparatus 5A receiving the copy information retrieval request refers to the volume table 620 and transmits the copy information regarding the check target volume number to the host computer 2.

If it is determined that the copy has not been completed based on the copy information (S16: No), the RAID manager 22 stands by until the copy is complete (S17) and then performs the processing in step S18.

On the other hand, if it is determined that the copy has been completed based on the copy information (S16: Yes), the RAID manager 22 retrieves the manufacturing number of the copy-destination storage apparatus and the number of the copy-destination volume (S18).

Then the RAID manager 22 refers to the command device table 210 and if it is determined that the retrieved copy-destination volume number indicates the final volume from the retrieved storage apparatus manufacturing number (S19: Yes), the RAID manager 22 retrieves the copy-destination volume number as the final volume (S21) and terminates the check execution processing (S22).

On the other hand, if the RAID manager 22 referring to the command device table 210 determines that there is a next check target and the retrieved copy-destination volume number is not the final volume (S19: No), the RAID manager 22 retrieves from the command device table 210 a storage apparatus manufacturing number corresponding to the next command device (S20). The RAID manager 22 performs the processing from steps S11 to S21 on the next check target storage apparatus 5B, and repeats the check execution processing until the final volume is retrieved. Here, the RAID manager 22 issues a control command to the command device in the next check target storage apparatus 5B.

In step S11, if the retrieved storage apparatus 5A is not connected to the host computer 2 and is unavailable (S11: No), the RAID manager 22 terminates the processing as an error (S12).

Next, the exchange of information between the host computer 2 and the check target storage apparatus 5A will be described. Here, the "information" is information about the check target storage apparatus that the host computer 2 wants to retrieve, e.g., copy information and pair information. For convenience of explanation, the below description will describe an example where the pair information is retrieved, but the information retrieved is not limited to the pair information.

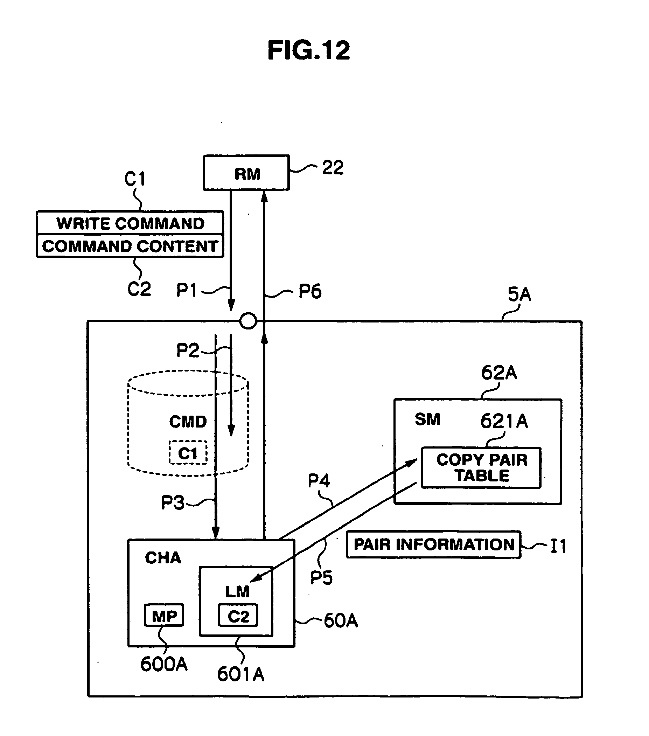

First, as shown in Fig. 12, the RAID manager 22 in the host computer 2 transmits pair information C2, which it desires to retrieve, together with a write command C1 to the command device in the check target storage apparatus 5A (P1).

When receiving the write command C1, the check target storage apparatus 5A writes the write command C1 in the command device (P2) and imports the desired pair information C2 as command content directly in a local memory 601 A in a channel adapter 60A (P3).

Then a microprocessor 600A in the channel adapter 60A accesses a shared memory 62A (P4), fetches corresponding pair information I1 from a copy pair table 621A, and stores the fetched pair information I1 in the local memory 601A (P5).

Then the channel adapter 60A provides to the host computer 2 a status report indicating that the write command C1 has been normally completed (P6).

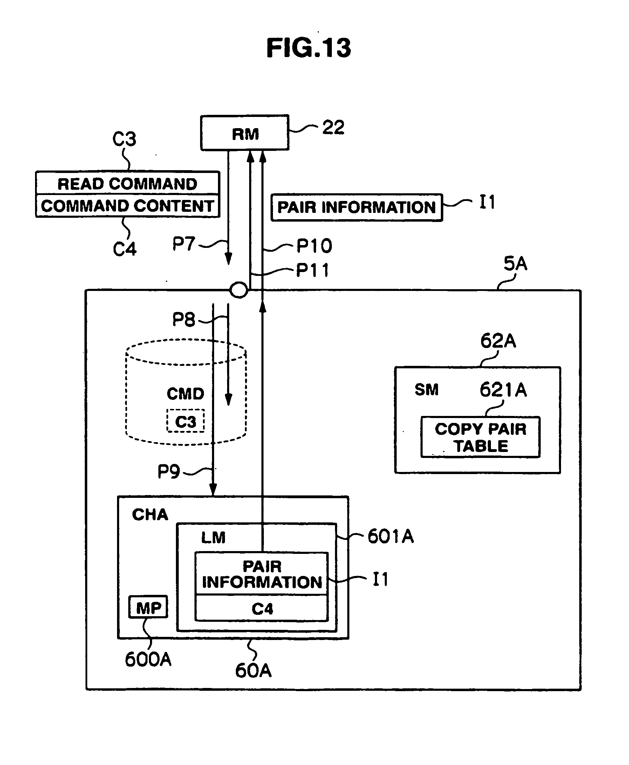

As shown in Fig. 13, the host computer 2 receiving the status report transmits a retrieval request C4 for retrieving pair information stored in the local memory 601A together with a read command C3 to the command device in the check target storage apparatus 5A (P7).

When receiving the read command C3, the check target storage apparatus 5A writes the read command C3 in the command device (P8) and imports the desired pair information C4 as command content directly to the local memory 601A in the channel adapter 60A (P9).

The microprocessor 600A in the channel adapter 60A transmits the pair information I1 to the host computer 2 (P10).

Then the channel adapter 60A provides to the host computer 2 a status report indicating that the read command C3 has been completed normally (P11).

Next, a modification of this embodiment will be described.

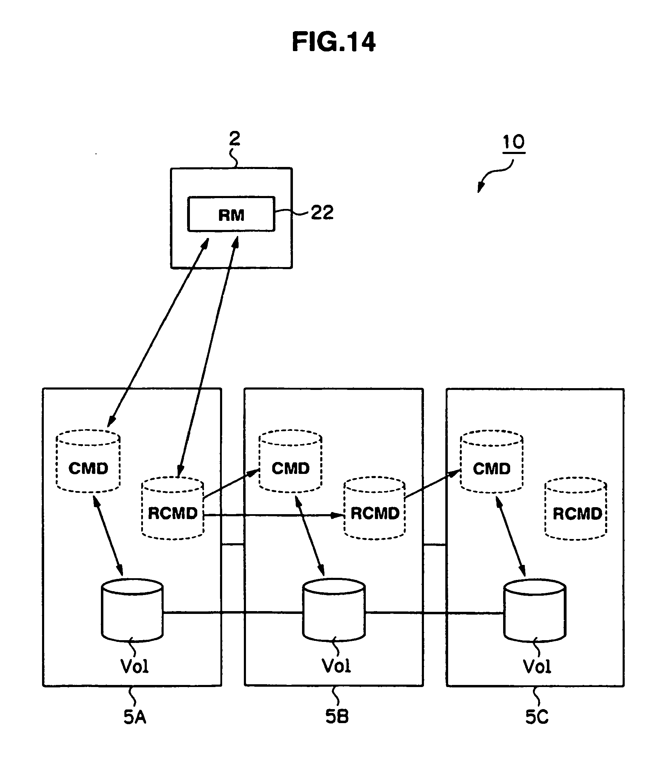

As shown in Fig. 14, a remote copy system 10 in this modification has a configuration in which the first storage apparatus 5A is connected to the host computer 2 while the second storage apparatus 5B and the third storage apparatus 5C are not connected to the host computer 2. Each storage apparatus 5 further includes a remote command device RCMD.

The remote command device is, like the command device, a dedicated volume or software used by each storage apparatus 5 to communicate a control command with the host computer. When the host computer 2 writes data (a control command) in the remote command device provided in the first storage apparatus 5A, the first storage apparatus 5A processes the write command stored in the remote command device. At this time, the control command written in the remote command device is the control command transmitted to the second storage apparatus 5B or the third storage apparatus 5C. The remote command device transmits the control command from the host computer 2 to the second storage apparatus 5B.

If the control command from the host computer 2 is the command transmitted to the second storage apparatus 5B, the second storage apparatus 5B writes this control command in its remote command device. On the other hand, if the control command from the host computer 2 is the control command transmitted to the third storage apparatus 5C, the second storage apparatus 5B writes this control command in its remote command device and also transmits it to the third storage apparatus 5C. The third storage apparatus 5C writes the control command in its command device and executes the processing in accordance with the content of the command.

The information retrieved by the second storage apparatus 5B or the third storage apparatus 5C is transmitted from the first storage apparatus 5A to the host computer 2.

With such a configuration, check processing for the copy path can be executed only by receiving a command from the host computer with only one storage apparatus, so a network environment can be simplified and the load on the entire remote copy system can be reduced.

As described above, in the check processing, the host computer transmits a control command to each storage apparatus, and each storage apparatus receiving this control command executes processing in accordance with the control command and transmits information stored in each storage apparatus to the host computer, so the host computer can integrally manage the storage apparatuses. This check processing provides a method capable of managing a copy path for data and checking a copy source and copy destination for the data. In addition, the check processing provides a method capable of checking the consistency of back up data.

### (1-5) Check recovery processing

Next, check recovery processing for checking a copy path and recovering the copy path if a failure is found in the copy path while the host computer 2 is checking the copy path.
Here, examples of the failure in a copy path include when the copy path is physically disconnected and when the copy path is intentionally interrupted.

The following description will describe an example in which a failure occurs on a copy path between the second storage apparatus 5B and the third storage apparatus 5C. For convenience of explanation, the below description will be provided on the premise that the check target storage apparatus is the first storage apparatus 5A, the check target volume is a copy-source volume in the first storage apparatus 5A, a copy-destination volume Vol is included in the second storage apparatus 5B, and a subsequent copy-destination volume is included in the third storage apparatus 5C.

This check recovery processing is performed by the RAID manager 22 in the host computer 2 in accordance with the check recovery program 213. This check recovery processing is premised on a copy path for common data having been formed in the past.

First, the RAID manager 22 performs the check recovery processing in accordance with the processing procedure from steps S1 to S7 described with reference to Fig. 7. The check recovery processing is performed using the same procedure as that of the check processing described above, except step 3. In step S3, the RAID manager 22 performs the check recovery execution processing.

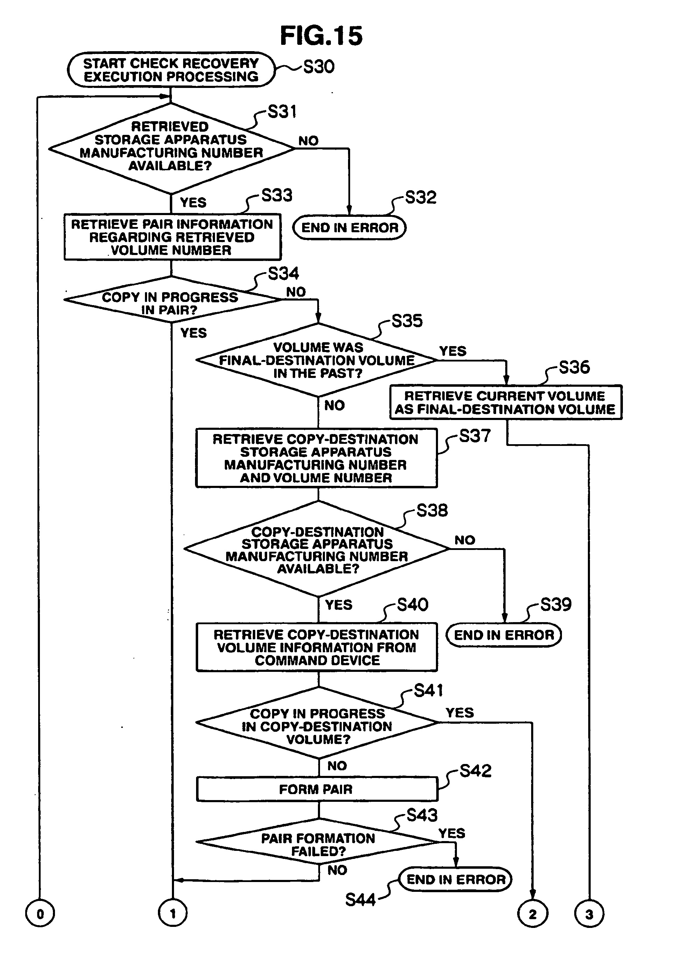

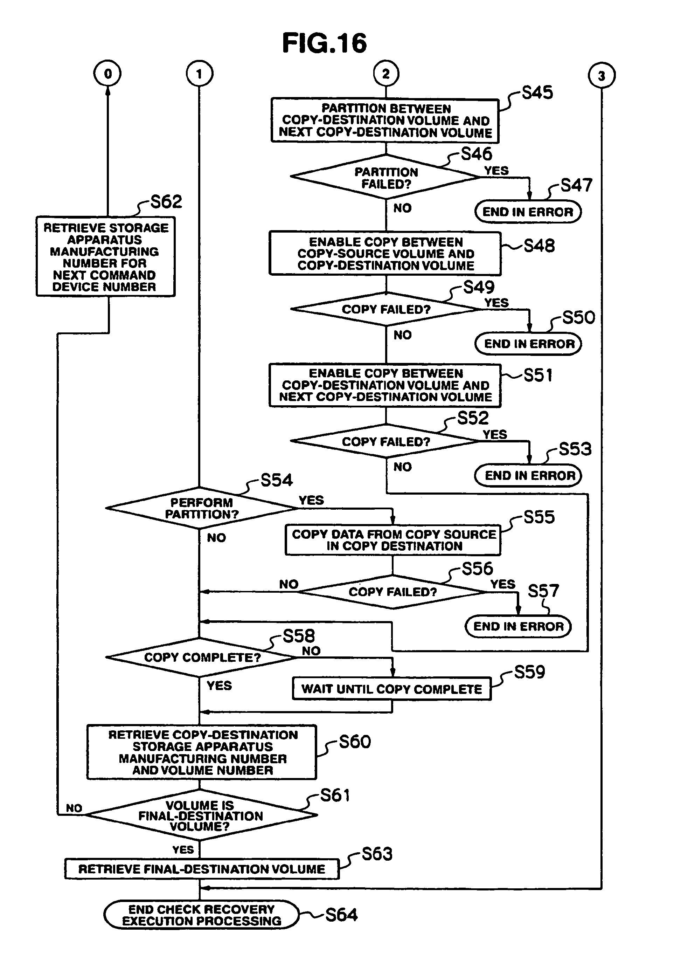

Figs. 15 and 16 show flowcharts for the check recovery execution processing.

When retrieving information about the storage apparatus manufacturing number and the copy-source volume number from the check target storage apparatus 5A, the RAID manager 22 starts the check recovery execution processing (S30).

Next, the RAID manage 22 performs the processing from steps S31 to S33 by the same procedure as in steps from S11 to S13.

When receiving the pair information, the RAID manager 22 judges whether or not remote copy is currently in progress between the check target volume and the paired copy-destination volume (S34), and if it is determined that the copy is not currently in progress (S34: No) the RAID manager 22 performs the processing from step S54. If the copy is not in progress, that means there is no pair including the check target volume as the start point.

When it is determined that the copy is not currently in progress between the check target volume and the paired copy-destination volume (S34: No), the RAID manager 22 transmits a control command to the command device in each of these volumes in order to judge whether or not these volumes are partitioned.

If it is determined that the check target volume and the copy-destination volume are partitioned, as a result of receiving partition information from the first storage apparatus 5A and the second storage apparatus 5B (S54: Yes), the RAID manager 22 transmits to the command device in each of the storage apparatuses a control command for copying data in the check target volume to the copy-destination volume. If a received copy result shows that the copy has been successfully completed (S56: No), the RAID manager 22 performs the processing from step S58.

On the other hand, the received copy result shows the copy has failed, (S56: Yes) the RAID manager terminates the processing as an error (S57).

If it is determined that the copy is currently in progress between the check target volume and the paired copy-destination volume in step S34 (S34: Yes), the RAID manager 22 judges whether or not the check target volume was the final volume in the copy path formed in the past (S35).

If it is determined that the check target volume was the final volume in the past (S35: Yes), the RAID manager 22 retrieves the check target volume as a final destination (S36), and terminates the check recovery execution processing (S64).

On the other hand, if it is determined that the check target volume was not the final volume in the past (S35: No), the RAID manager 22 retrieves the manufacturing number of the copy-destination second storage apparatus and the number of copy-destination volumes from the pair information (S37).

Then if the retrieved copy-destination second storage apparatus 5B is connected to the host computer 2 and is available (S38: Yes), the RAID manager 22 extracts volume information for the retrieved copy-destination volume from a volume table 620B and retrieves volume information from the command device in the second storage apparatus 5B (S40).

If it is determined that copy is not currently in progress between the copy-destination volume and the subsequent copy-destination volume from the retrieved volume information (S41: Yes), the RAID manager 22 transmits a control command for forming a pair between the check target volume and the copy-destination volume to the command device in each of the first storage apparatus 5A and the second storage apparatus 5B.

The first storage apparatus 5A and the second storage apparatus 5B form the pair based on the content of the command devices in which the control command has been written (S42), and if a report indicating that the pair has been successfully formed is received from the storage apparatus (S43: No), the RAID manager 22 performs the processing from step S54. If a report indicating that the pair has not been successfully formed is received from the first storage apparatus 5A and the second storage apparatus 5B, the RAID manager 22 determines that there is a failure for which recovery processing cannot be performed and terminates this processing as an error (S44).

If it is determined that the copy is in progress between the copy-destination volume and the subsequent copy-destination volume (S41: Yes), the RAID manager 22 transmits a control command for partitioning the copy path between these volumes to the command device (S45).

When receiving a report indicating that the partition has been performed successfully from the second storage apparatus 5B and the third storage apparatus 5C (S46: No), the RAID manager 22 issues a control command for commanding the first storage apparatus 5A and the second storage apparatus 5B to form again the copy path between the check target volume and the copy-destination volume (S48) and executes copy between these volumes.

When receiving a report indicating the copy has been performed successfully from the first storage apparatus 5A and the second storage apparatus 5B (S49: No), the RAID manager 22 issues a control command for commanding the second storage apparatus 5B and the third storage apparatus 5C to form again a copy path between the copy-destination volume and the subsequent copy-destination volume (S51), and executes copy between these volumes. The recovery processing is performed in this step.

When receiving a report indicating that the copy has been performed successfully from the second storage apparatus 5B and the third storage apparatus 5C (S52: No), the RAID manager 22 performs processing from step S58.

On the other hand, when receiving a report indicating that the partition has not been performed successfully (S46: Yes), re-formation has not been performed successfully (S49: Yes) and the copy has not been performed successfully (S52: Yes) from the storage apparatuses, the RAID manager 22 judges there is a failure that cannot be recovered and terminates the processing as an error (S47, S50 and S53).

Then the RAID manager 22 performs the processing from step S58 to step S63 by the same procedure as in steps S16 to S21, and terminates the check recovery execution processing (S64).

Here, the administrator can check the execution result of the check recovery processing on a screen S4 in the host computer 2.

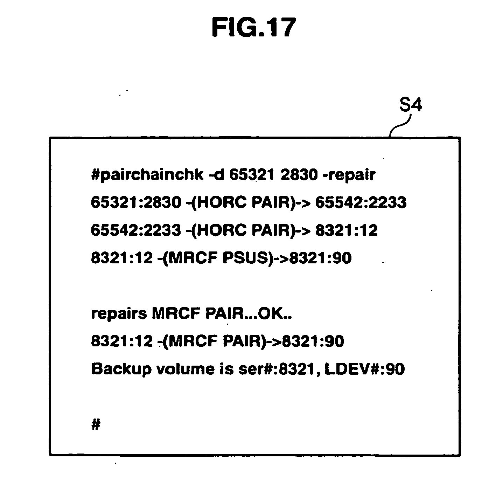

Fig. 17 is the screen S4 on which the administrator checks whether or not common data has been successfully stored in the volumes up to the final copy-destination volume in step S52. The screen S4 shows that, as a result of checking the recovery of the copy path starting from the volume with the volume number "2830" in the storage apparatus with the manufacturing number "65321," the first copy-destination is the volume with the volume number "2233" in the storage apparatus with the manufacturing number "65542," the subsequent copy-destination is the volume with the volume number "12" in the storage apparatus with the manufacturing number "8321" and the final copy-destination is the volume with the volume number "90" in the storage apparatus with the manufacturing number "8321."

The screen S4 shows that this copy path has been recovered in a zone between the subsequent copy-destination volume with the volume number "12" in the storage apparatus with the manufacturing number "8321" and the final copy-destination volume with the volume number"90" in the storage apparatus with the manufacturing number "8321" and that the common data has been stored in the volumes up to the final volume Vol.

As described above, the host computer transmits a control command to each storage apparatus and each storage apparatus receiving this control command executes the processing in accordance with the control command and transmits information stored in the relevant storage apparatus to the host computer, so the host computer can also integrally manage the check recovery processing. In addition, even if the copy path is disconnected for some reason, the copy path can be recovered and the common data can be stored in the volumes on the common copy path. This embodiment provides a method capable of managing the copy path of data and of checking the copy source and the copy destination of that data. In addition, this embodiment provides a method capable of checking the consistency of backup data.

### (1-6) Advantage of first embodiment

According to this embodiment, since the host computer performs the check processing and the check recovery processing, the manual work of checking the operation of the storage apparatuses performed by the administrator can be reduced and continuous data copy can be managed.

### (2) Second Embodiment

A second embodiment of this invention will be described with reference to the attached drawings.

### (2-1) System configuration

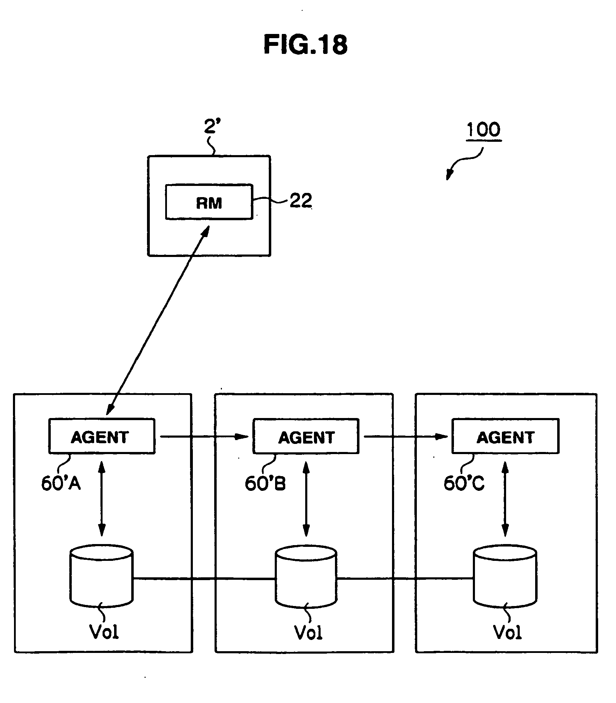

Fig. 18 is a block diagram showing the configuration of a remote copy system 100 according to the second embodiment.

Although the check processing and the check recovery processing are performed in the host computer 2 in the first embodiment, the check processing and check recovery processing are performed by a check-target storage apparatus 5 in the second embodiment.

In the first embodiment, the command device retrieves information based on the content of the control command from the host computer 2 and transmits that information to the host computer 2. However, in this embodiment, an agent 60' performs processing based on the content of a control command from a host computer 2'. The agent 60' is different from the command device in the first embodiment in that it can actually perform the check processing and the check recovery processing based on the content of the control command. Although the channel adapter 60 serves as the agent 60' in this embodiment, the agent 60' is not limited to the channel adapter 60 and the disk adapter 64 may also serve as the agent 60.

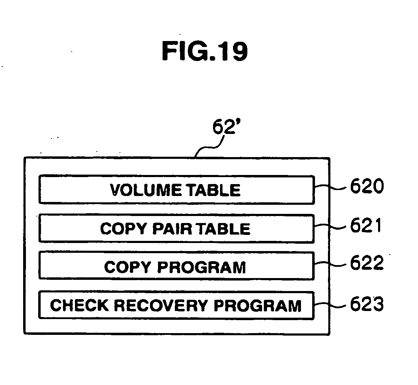

As shown in Fig. 19, a shared memory 62' in a storage apparatus 5' in this embodiment stores a check recovery program 623'. Other components are the same as those in the first embodiment, so their description will be omitted.

### (2-2) Check processing

Next, processing in which the host computer 2' checks a copy path will be described. The RAID manager 22 in the host computer 2' performs the check processing in accordance with the check program 212.

For convenience of explanation, the below description will be provided on the premise that a check target storage apparatus 5 is a first storage apparatus 5A', a check target volume is a copy-source volume included in the first storage apparatus 5'A, a copy-destination volume is included in a second storage apparatus 5'B, and a subsequent copy-destination volume is included in a third storage apparatus 5'C.

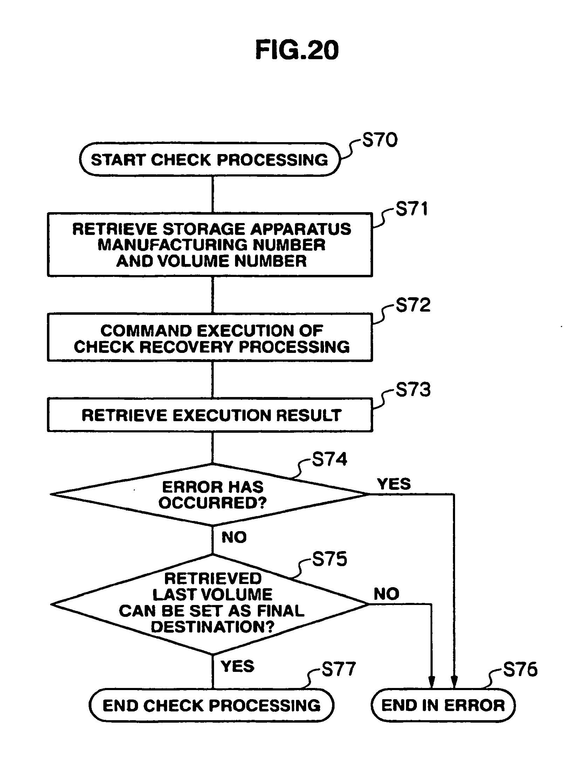

Fig. 20 is a flowchart showing the check processing.

First, the RAID manager 22 refers to the command device table 210 and issues a retrieval request for the manufacturing number of the check target storage apparatus 5'A and the copy-source volume number from the check target storage apparatus 5'A, and starts the check processing (S70).

Then the RAID manager 22 retrieves the storage apparatus 5'A manufacturing number and the copy-source volume number from the check target storage apparatus 5'A (S71).

The RAID manager 22 commands the first storage apparatus 5'A to perform the check recovery processing for checking a copy path from the start copy-source volume to the copy-destination volume in which the copy data is finally stored (S72). This check recovery processing will be descried later.

When receiving the check recovery processing execution result (S73), the RAID manager 22 performs the processing from steps S74 to S77 by the same procedure as that for the processing from steps S4 to S7.

### (2-3) Check recovery processing

The check execution processing in step S72 will be described. The check execution processing will be performed by the agent 60'A in accordance with the check recovery program 623 and the copy program 622.

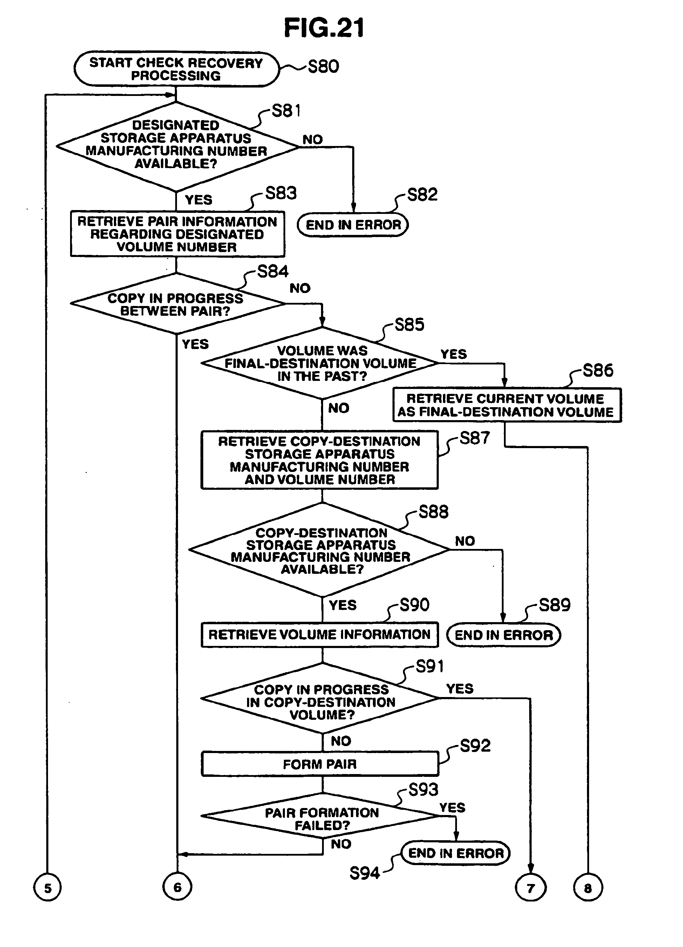

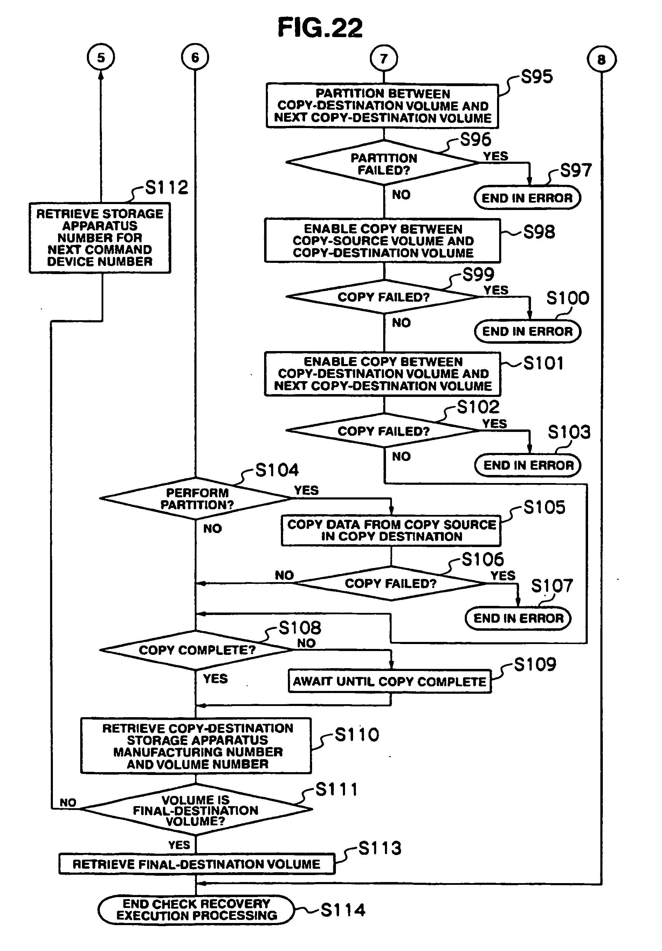

First, as shown in Figs. 21 and 22, when the agent 60'A receives a check recovery processing command from the RAID manager 22, the agent 60'A in the first storage apparatus 5'A starts the check recovery processing (S80). The check recovery processing command includes a command for checking a copy path starting from the start volume in the check target first storage apparatus 5'A and recovering the copy path if there is a failure on the copy path.

Next, if the check target first storage apparatus 5'A is connected to the host computer 2 and is available (S81: Yes), the agent 60'A in the check target first storage apparatus 5'A refers to the copy pair management table 621 to retrieve pair information regarding the check command target volume number (S83).

Then the agent 60'A performs the processing from steps S84 to S114 using the same procedure as that for the processing in steps S34 to S64.

However, the agent 60'A communicates with an agent 60'B in the copy destination to retrieve volume information for the copy-destination (S90).

At this time, the request-source agent 60'A can retrieve the information according to the requested content by communicating with the request-destination agent 60'B. Although the below description will be provided with the agent 60'A serving as a requesting agent and the agent 60'B serving as the requested agent, possible configurations are not limited to this.

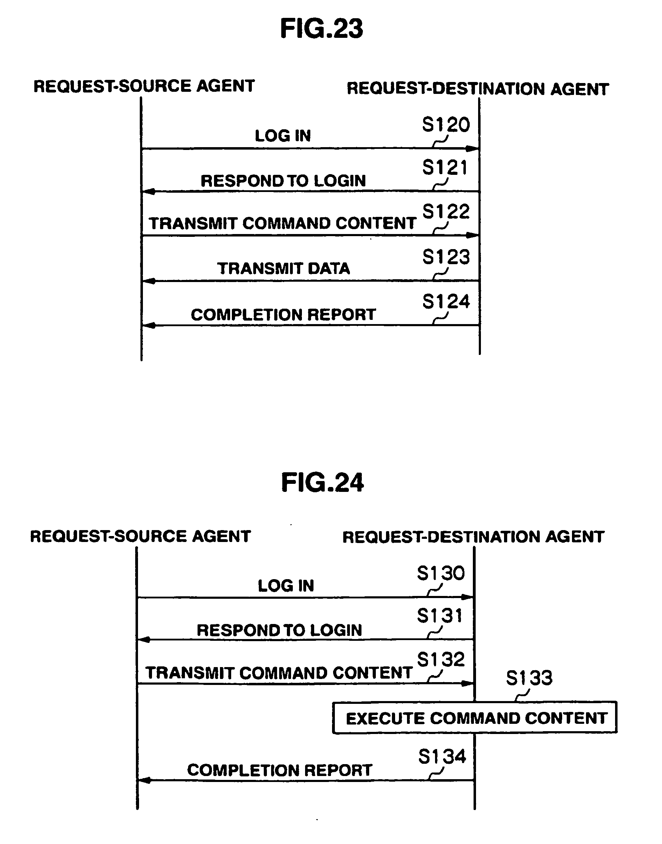

Specifically, as shown in Fig. 23, the request-source agent 60'A logs in to the request-destination agent 60'B (S120) and confirms that a response indicating that the login has been successfully made is returned from the request-destination agent 60'B (S121).

Then the request-source agent 60'A transmits a command to the request-destination agent 60'B (S122). The command is a retrieval command for volume information about the copy destination.

The agent 60'B receiving this command transmits data about a pair status, the storage apparatus manufacturing number and the volume number based on a copy pair table in a shared memory 62'B in the request-destination agent 60'B (S123).

The request-destination agent 60'B transmits a report reporting that the transmission to the request-source agent 60'A (S124) has been completed.

When a pair is formed in step S92, the copy path is partitioned in step S95 and copy is executed in steps S101 and S105, and the request-source agent 60'A can retrieve by communicating with the agent 60'B as shown in Fig. 24.

Specifically, the request-source agent 60'A logs in to the request-destination agent 60'B (S130) and confirms a response indicating that the login has been made successfully is returned from the request-destination agent 60'B (S131).

Then the request-source agent 60'A transmits a command to the request-destination agent 60'B (S132). The command here is a command for forming a pair, partitioning the copy path and executing the copy.

The request-destination agent 60'B receiving this command executes the command content in accordance with the copy program 622 in a shared memory 62' in the request-destination agent 60'B (S133).

The request-destination agent 60'B transmits the execution result to the request-source agent 60'A (S134).

As described above, when the host computer 2' transmits a check command to the first storage apparatus 5'A, the agent 60A' receiving this check command executes the check and transmits the check result to the host computer 2'. With this configuration, the host computer 2' in this embodiment can integrally manage the check processing. In addition, all the host computer 2' has to do is to transmit the command, so load on the host computer 2' is smaller compared to that in the configuration in the first embodiment. Furthermore, even if the copy path is disconnected for some reason, the remote copy system 100 in this embodiment can recover the copy path and store common data in the volumes on the common copy path. This embodiment provides a method capable of managing a copy path for data and checking the copy source and the copy destination of the data. In addition, this embodiment provides a method capable of checking the consistency of backup data.

### (2-2) Advantage of second embodiment

With the configuration of this embodiment, since the agent in the storage apparatus performs the check recovery processing based on a command from the host computer, the work of manually checking the operation of the storage apparatus performed by the administrator can be reduced and continuous data copy can be managed.

This invention is widely applicable in a remote copy system having one or more storage apparatuses and other types of remote copy systems.

While the invention has been described with respect to a limited number of embodiments, those skilled in the art, having benefit of this disclosure, will appreciate that other embodiments can be devised that do not depart from the scope of the invention as disclosed herein. Accordingly, the scope of the invention should be limited only by the attached claims.

## Claims

1. A remote copy system (1), comprising at least:
a host system (2);
a first storage apparatus (5A) connected to the host system so as to enable communication therebetween; and
a second storage apparatus (5B) connected to the first storage apparatus so as to enable communication therebetween, wherein
the first storage apparatus (5A) and second storage apparatus (5B) each include: a logical device in which a control command from the host system is written; one or more logical volumes that are provided by storage areas in plural hard disks and store data; and pair information (621) regarding pairs formed from the plural logical volumes, and **characterized in that**
the remote copy system further includes a check unit that checks based on the pair information, when the control command from the host system (2) is written in each logical device, a copy path from a logical volume designated as a start point by the host system (2) to a final logical volume in which data same as that in the start point logical volume is stored.

2. The remote copy system according to claim 1, further comprising:
a check recovery unit that: checks, with the logical volume designated by the host system (2), a logical volume that served as a copy-destination logical volume in the past based on the pair information; sets, if there is no logical volume as a subsequent copy-destination subsequent to the past copy-destination logical volume, the copy-source logical volume and the past copy-destination logical volume as pair volumes; and temporarily interrupts, if there is a logical volume as a subsequent copy destination subsequent to the past copy-destination logical volume, communication on a copy path between the past copy-destination logical volume and the subsequent copy-destination logical volume, copies data stored in the copy-source logical volume to the past copy-destination logical volume, and then restores the communication on the copy path.

3. The remote copy system according to claim 2, wherein the check unit and the check recovery unit are included in the host system (2).

4. The remote copy system according to claim 2, wherein the check unit and the check recovery unit are included in at least the first storage apparatus (5A).

5. The remote copy system according to any one of claims 1 to 4, wherein:
the first storage apparatus (5A) and the second storage apparatus (5B) further include a remote logical device that writes a control command for a third storage apparatus (5C); and
when a write command from the host system (2) is written in the remote logical device, the first storage apparatus (5A) and the second storage apparatus (5B) issue the control command to the third storage apparatus (5C).

6. A check method for a remote copy system that includes at least: a host system (2); a first storage apparatus (5A) connected to the host system (2) so as to enable communication therebetween; and a second storage apparatus (5B) connected to the first storage apparatus so as to enable communication therebetween, the method comprising the steps of:
the first storage apparatus (5A) and second storage apparatus (5B) having a control command from the host system written in a logical device, storing data in one or more logical volumes provided by storage areas in plural hard disks, and managing pair information regarding pairs formed from the plural logical volumes; and **characterized in that**
the method comprises a check step of checking, when the control command from the host system (2) is written in each logical device, a copy path from a logical volume designated as a start point by the host system to a final logical volume in which data same as that in the start point logical volume is stored, based on the pair information.

7. The check method according to claim 6, further comprising:
a check recovery step of: checking, with the logical volume designated by the host system (2) serving as a copy-source logical volume, a logical volume that served as a copy-destination logical volume in the past based on the pair information; setting, if there is no logical volume as a subsequent copy destination subsequent to the past copy-destination logical volume, the copy-source logical volume and the past copy-destination logical volume to pair volumes; and temporarily interrupting, if there is a logical volume as a subsequent copy destination subsequent to the past copy-destination logical volume, communication on a copy path between the past copy-destination logical volume and the subsequent copy-destination logical volume, copying data stored in the copy-source logical volume to the past copy-destination logical volume, and then restoring the communication on the copy path.

8. The check method according to claim 7, wherein the check step and the check recovery step are performed by the host system.

9. The check method according to claim 7, wherein the check step and the check recovery step are performed by at least the first storage apparatus.

10. The check method according to any one of claims 6 to 9, wherein the first storage apparatus and the second storage apparatus further perform the steps of:
writing a control command for a third storage apparatus in a remote logical device; and
issuing the control command to the third storage apparatus when a write command from the host system is written in the logical device.

## Patentansprüche

1. Fernkopiersystem (1) mit mindestens:
einem Hostsystem (2);
einem ersten Speichergerät (5A), das mit dem Hostsystem verbunden ist, um Kommunikation dazwischen zu ermöglichen; und
einem zweiten Speichergerät (5A), das mit ersten Speichergerät verbunden ist, um Kommunikation dazwischen zu ermöglichen, wobei
das erste Speichergerät (5A) und das zweite Speichergerät (5B) jeweils umfassen: eine Logikvorrichtung, in die ein Steuerbefehl von dem Hostsystem geschrieben ist; ein oder mehrere logische Volumes, die als Speicherbereiche auf mehreren Festplatten vorgesehen sind und Daten speichern; und Paarinformationen (621), die von den mehreren logischen Volumes gebildete Paare betreffen,
**dadurch gekennzeichnet, dass** das Fernkopiersystem ferner eine Prüfeinheit umfasst, die dann, wenn der Steuerbefehl von dem Hostsystem (2) in jede Logikvorrichtung geschrieben ist, einen Kopierpfad von einem logischen Volume, das von dem Hostsystem (2) als Startpunkt benannt ist, bis zu einem logischen Endpunkt-Volume, in dem die gleichen Daten wie in dem logischen Startpunkt-Volume gespeichert sind, überprüft.

2. Fernkopiersystem nach Anspruch 1, mit ferner einer Prüfwiederherstelleinheit, die mit dem von dem Hostsystem (2) benannten logischen Volume anhand der Paarinformationen ein logisches Volume überprüft, das in der Vergangenheit als logisches Kopierziel-Volume diente; dann, wenn es kein logisches Volume als nachfolgendes Kopierziel gibt, das dem vorhergehenden logischen Kopierziel-Volume nachfolgt, das logische Kopierquellen-Volume und das vorhergehende logische Kopierziel-Volume als Volumepaar festlegt; und dann, wenn es ein logisches Volume als nachfolgendes Kopierziel gibt, das dem vorhergehenden logischen Kopierziel-Volume nachfolgt, eine Kommunikation auf einem Kopierpfad zwischen dem vorhergehenden logischen Kopierziel-Volume und dem darauffolgenden logischen Kopierziel-Volume vorübergehend unterbricht, in dem logischen Kopierquellen-Volume gespeicherte Daten in das vorhergehende logische Kopierziel-Volume kopiert, und danach die Kommunikation auf dem Kopierpfad wiederherstellt.

3. Fernkopiersystem nach Anspruch 2, wobei die Prüfeinheit und die Prüfwiederherstelleinheit in dem Hostsystem (2) enthalten sind.

4. Fernkopiersystem nach Anspruch 2, wobei die Prüfeinheit und die Prüfwiederherstelleinheit in mindestens dem ersten Speichergerät (5A) enthalten sind.

5. Fernkopiersystem nach einem der Ansprüche 1 bis 4, wobei:
das erste Speichergerät (5A) und das zweite Speichergerät (5B) ferner eine entfernte Logikvorrichtung umfassen, die einen Steuerbefehl für ein drittes Speichergerät (5C) schreibt; und
dann, wenn ein Schreibbefehl von dem Hostsystem (2) in die entfernte Logikvorrichtung geschrieben ist, das erste Speichergerät (5A) und das zweite Speichergerät (5B) den Steuerbefehl an das dritte Speichergerät (5C) ausgeben.

6. Prüfverfahren für ein Fernkopiersystem mit mindestens einem Hostsystem (2); einem ersten Speichergerät (5A), das mit dem Hostsystem verbunden ist, um Kommunikation dazwischen zu ermöglichen; und einem zweiten Speichergerät (5B), das mit ersten Speichergerät verbunden ist, um Kommunikation dazwischen zu ermöglichen, wobei in dem Verfahren:
das erste Speichergerät (5A) und das zweite Speichergerät (5B), bei denen ein Steuerbefehl von dem Hostsystem in eine Logikvorrichtung geschrieben ist, Daten in ein oder mehrere logische Volumes schreiben, die als Speicherbereiche in mehreren Festplatten vorgesehen sind, und Paarinformationen, die von den mehreren logischen Volumes gebildete Paare betreffen, verwalten; und
**dadurch gekennzeichnet, dass**
das Verfahren einen Prüfschritt enthält, in dem dann, wenn der Steuerbefehl von dem Hostsystem (2) in jede Logikvorrichtung geschrieben ist, ein Kopierpfad von einem logischen Volume, das von dem Hostsystem als Startpunkt benannt ist, bis zu einem logischen Endpunkt-Volume, in dem die gleichen Daten wie in dem logischen Startpunkt-Volume gespeichert sind, überprüft wird.

7. Prüfverfahren nach Anspruch 6, mit ferner einem Prüfwiederherstellschritt, in dem mit dem von dem Hostsystem (2) benannten logischen Volume, das als logisches Kopierquellen-Volume dient, anhand der Kopierinformationen ein logisches Volume überprüft wird, das als logisches Kopierziel-Volume in der Vergangenheit gedient hat; dann, wenn es kein logisches Volume als nachfolgendes Kopierziel gibt, das dem vorhergehenden logischen Kopierziel-Volume nachfolgt, das logische Kopierquellen-Volume und das vorhergehende logische Kopierziel-Volume als Volumepaar festgelegt werden; und dann, wenn es ein logisches Volume als nachfolgendes Kopierziel gibt, das dem vorhergehenden logischen Kopierziel-Volume nachfolgt, die Kommunikation auf einem Kopierpfad zwischen dem vorhergehenden logischen Kopierziel-Volume und dem nachfolgenden logischen Kopierziel-Volume vorübergehend unterbrochen wird, in dem logischen Kopierquellen-Volume gespeicherte Daten in das letzte logische Kopierziel-Volume kopiert werden, und danach die Kommunikation auf dem Kopierpfad wiederhergestellt wird.

8. Prüfverfahren nach Anspruch 7, wobei der Prüfschritt und der Prüfwiederherstellschritt von dem Hostsystem durchgeführt werden.

9. Prüfverfahren nach Anspruch 7, wobei der Prüfschritt und der Prüfwiederherstellschritt durch mindestens das erste Speichergerät durchgeführt werden.

10. Prüfverfahren nach einem der Ansprüche 6 bis 9, wobei das erste Speichergerät und das zweite Speichergerät ferner:
einen Steuerbefehl für ein drittes Speichergerät in einer entfernte Logikvorrichtung schreiben; und
den Steuerbefehl an das dritte Speichergerät ausgeben, wenn ein Schreibbefehl von dem Hostsystem in die Logikvorrichtung geschrieben wird.

## Revendications

1. Système de copie à distance (1) comprenant au moins:
un système d'hôte (2);
un premier appareil de stockage (5A) relié au système d'hôte de manière à permettre une communication entre eux; et
un deuxième appareil de stockage (5B) relié au premier appareil de stockage pour permettre la communication entre eux, où
le premier appareil de stockage (5A) et le deuxième appareil de stockage (5B) comprennent chacun: un dispositif logique dans lequel une instruction de commande du système d'hôte est écrite; un ou plusieurs volumes logiques qui sont réalisés par des zones de stockage dans plusieurs disques durs et stockent des données; et des informations de paires (621) se rapportant à des paires formées par la pluralité de volumes logiques, et **caractérisé en ce que**
le système de copie à distance comprend en outre une unité de vérification qui vérifie, sur la base de l'information de paires, lorsque l'instruction de commande du système d'hôte (2) est écrite dans chaque dispositif logique, un chemin de copie d'un volume logique désigné comme point de départ par le système d'hôte (2) à un volume logique final dans lequel des données identiques à celles dans le volume logique de point de départ sont stockées.

2. Système de copie à distance selon la revendication 1, comprenant en outre:
une unité de récupération de vérification qui vérifie, avec le volume logique désigné par le système d'hôte (2), un volume logique qui a servi de volume logique de destination de copie dans le passé sur la base des informations de paires; établit, s'il n'y a pas de volume logique comme destination de copie suivante, qui suit au volume logique de destination de copie passé, le volume logique de source de copie et le volume logique de destination de copie passé comme volumes de paires; et interrompt temporairement, s'il y a un volume logique comme destination de copie suivante qui fait suite au volume logique de destination de copie passée, une communication sur le chemin de copie entre le volume logique de destination de copie passé et le volume logique de destination de copie suivant, des données de copie stockées dans le volume logique de source de copie dans le volume logique de destination de copie passé et rétablit ensuite la communication sur le chemin de copie.

3. Système de copie à distance selon la revendication 2, dans lequel l'unité de vérification et l'unité de récupération de vérification sont incluses dans le système d'hôte (2).

4. Système de copie à distance selon la revendication 2, dans lequel l'unité de vérification et l'unité de récupération de vérification sont incluses dans au moins le premier appareil de stockage (5A).

5. Système de copie à distance selon l'une quelconque des revendications 1 à 4, dans lequel:
le premier appareil de stockage (5A) et le deuxième appareil de stockage (5B) comprennent en outre un dispositif logique à distance qui écrit une instruction de commande pour un troisième appareil de stockage (5C); et lorsqu'une instruction d'écriture du système d'hôte (2) est écrite dans le dispositif logique à distance, le premier appareil de stockage (5A) et le deuxième appareil de stockage (5B) émettent l'instruction de commande au troisième appareil de stockage (5C).

6. Procédé de vérification pour un système de copie à distance qui comprend au moins:
un système d'hôte (2); un premier appareil de stockage (5A) relié au système d'hôte (2) de façon à permettre la communication entre eux; et un deuxième appareil de stockage (5B) relié au premier appareil de stockage de façon à permettre la communication entre eux, le procédé comprenant les étapes de:
le premier appareil de stockage (5A) et le deuxième appareil de stockage (5B) ayant une instruction de commande du système d'hôte écrite dans un dispositif logique, stockant des données dans un ou plusieurs volumes logiques réalisés par des zones de stockage dans plusieurs disques durs, et gérant des informations de paires se rapportant à des paires formées par la pluralité de volumes logiques; et **caractérisé en ce que**
le procédé comprend une étape de vérification consistant à vérifier, lorsque l'instruction de commande du système d'hôte (2) est écrite dans chaque dispositif logique, un chemin de copie d'un volume logique désigné comme un point de départ par le système d'hôte à un volume logique final dans lequel des données identiques à celles dans le volume logique de point de départ sont stockées, basée sur l'information paires.

7. Procédé de vérification selon la revendication 6, comprenant en outre:
une étape de récupération de vérification consistant à vérifier, avec le volume logique désigné par le système d'hôte (2) servant de volume logique de source de copie, un volume logique qui a servi de volume logique de destination de copie dans le passé sur la base des informations de paires; régler, s'il n'y a pas de volume logique comme destination de copie suivante, faisant suite au volume logique de destination de copie passé, le volume logique de source de copie et le volume logique de destination de copie passé en des volumes pairs; et interrompre temporairement, s'il y a un volume logique comme destination de copie suivante faisant suite au volume logique de destination de copie passée, la communication sur un chemin de copie entre le volume logique de destination de copie passé et le volume logique de destination de copie suivant, copier des données stockées dans le volume logique de source de copie dans le volume logique de destination de copie passée et rétablir ensuite la communication sur le chemin de copie.

8. Procédé de vérification selon la revendication 7, dans lequel l'étape de vérification et l'étape de récupération de vérification sont exécutées par le système d'hôte.

9. Procédé de vérification selon la revendication 7, dans lequel l'étape de vérification et l'étape de récupération de vérification sont exécutées par au moins le premier appareil de stockage.

10. Procédé de vérification selon l'une quelconque des revendications 6 à 9, dans lequel le premier appareil de stockage et le deuxième appareil de stockage exécute en outre les étapes de:
écrire une instruction de commande pour un troisième appareil de stockage dans un dispositif logique à distance; et
émettre l'instruction de commande au troisième appareil de stockage lorsqu'une instruction d'écriture du système d'hôte est écrite dans le dispositif logique.
